# EUROPÄISCHE PATENTSCHRIFT

(11) **EP 0 361 251 B1**
(45) Veröffentlichungstag und Bekanntmachung des Hinweises auf die Patenterteilung: **13.09.1995**
(21) Anmeldenummer: 89117198.5
(22) Anmeldetag: 18.09.1989
(51) Int. Cl.: C09B 67/42, C09B 11/24, C09B 67/54

(54) **Verfahren zur Herstellung von Rhodamin-Farbstoffen in Granulatform**
Process for the production of rhodamine dyes in the shape of granulates
Procédé de fabrication de colorants rhodaminiques sous forme de granulés

(30) Priorität: 27.09.1988 DE 3832739
(43) Veröffentlichungstag der Anmeldung: 04.04.1990
(73) Patentinhaber: BASF Aktiengesellschaft, 67063 Ludwigshafen (DE)
(72) Erfinder: Schmeidl, Karl, Dr., D-8586 Gefrees (DE)

(56) Entgegenhaltungen:
- DE-A- 3 531 272
- US-A- 3 767 358
- US-A- 3 883 529
- US-A- 4 208 370
- CHEMICAL ABSTRACTS, vol. 81, no. 8, 26. August 1974, Columbus, Ohio, US; abstract no. 38845Q, Seite 79

## Beschreibung

Die vorliegende Erfindung betrifft ein neues Verfahren zur Herstellung von Salzen von veresterten Rhodamin-Farbstoffen in Granulatform durch Fällen der Rhodamin-Farbstoffe aus wäßrigem Medium, das ein wassermischbares Lösungsmittel enthält, mittels Natriumchlorid, wobei man die Zugabe von Natriumchlorid bei einer Temperatur oberhalb von 80°C vornimmt und dabei die Farbstoffe in flüssigem Aggregatzustand vom wäßrigen Medium abscheidet, sie dann durch Rühren in Tropfenform bringt und sie anschließend durch direktes Kühlen auf eine Temperatur unterhalb von 65°C abschreckt.

Die JP-A-23225/1974 beschreibt die Abscheidung von Rhodamin-Farbstoffen aus wäßrigem Medium, das u.a. Methanol und Benzylalkohol enthalten kann.

Aus der DE-A-3 531 272 ist die Herstellung von veresterten Rhodamin-Farbstoffen bekannt. In dem dort beschriebenen Verfahren wird die Veresterung der entsprechenden Lactonverbindungen mit Dialkylsulfat u.a. in Ethylencarbonat oder Propylencarbonat als Lösungsmittel in Gegenwart einer Base durchgeführt. Dabei gelangt man zu vollständig veresterten Rhodamin-Farbstoffen, die bei der Aufarbeitung, nachdem überschüssiges Dialkylsulfat und Ethylencarbonat oder Propylencarbonat in alkalischem Milieu verseift worden sind, durch Zugabe von Salzsäure und Natriumchlorid in Form der jeweiligen Chloride ausgefällt werden.

Die Zugabe von Salzsäure erfolgt bei einer Temperatur von 90°C, danach wird die Lösung auf 80°C abgekühlt, mit Natriumchlorid versetzt und dann im Verlauf von 6 bis 7 Stunden auf unter 50°C abgekühlt.

Bei der Weiterverarbeitung der anfallenden Farbstoffe kommt es aber häufig zu Problemen, da die so erhaltenen festen Rhodamin-Farbstoffe nicht staubarm sind. Aus arbeitsplatzhygienischen Gründen sind jedoch Farbstoffe in staubarmer oder staubfreier Form erwünscht.

Aufgabe der vorliegenden Erfindung war es deshalb, ein Verfahren bereitzustellen, mittels dessen die Herstellung von Rhodamin-Farbstoffen in nichtstaubender Form gelingen sollte.

Es wurde nun gefunden, daß die Herstellung von Rhodamin-Farbstoffen der Formel I 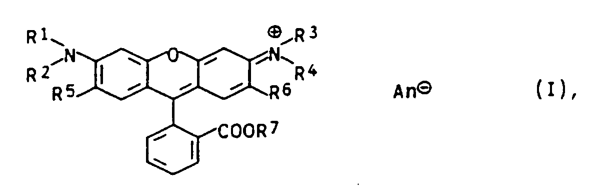
in der
- R¹, R³ und R⁷: gleich oder verschieden sind und unabhängig voneinander jeweils Methyl oder Ethyl,
- R² und R⁴: gleich oder verschieden sind und unabhängig voneinander jeweils Wasserstoff, Methyl oder Ethyl,
- R⁵ und R⁶: gleich oder verschieden sind und unabhängig voneinander jeweils Wasserstoff oder Methyl und
- An^{⊖}: Chlorid, Methosulfat oder Ethosulfat bedeuten,
in Granulatform durch Fällen von Rhodamin-Farbstoffen der Formel I, in der R¹, R², R³, R⁴, R⁵, R⁶ und R⁷ jeweils die obengenannte Bedeutung besitzen und An^{⊖} ein Anion bedeutet, aus wäßrigem Medium, das ein wassermischbares Lösungsmittel enthält, mittels Natriumchlorid vorteilhaft gelingt, wenn man die Zugabe von Natriumchlorid bei einer Temperatur von 80 bis 100°C vornimmt und dabei die Farbstoffe in flüssigem Aggregatzustand vom wäßrigen Medium abscheidet, sie dann durch Rühren in Tropfenform bringt und sie anschließend durch direktes Kühlen auf eine Temperatur unterhalb von 65°C abschreckt.

Geeignete wassermischbare Lösungsmittel sind z.B. Isobutanol oder Glykole oder veretherte Glykole, wie Ethylenglykol, 1,2-Propylenglykol, 1,2-Butylenglykol, 1,2-Isobutylenglykol, Diethylenglykol, Triethylenglykol, Polyethylenglykole, Dipropylenglykol, Ethylenglykolmonomethyl-, -ethyl-, -propyl- oder -butylether, Diethylenglykolmonomethyl-, -ethyl-, -propyl- oder -butylether, Ethylencarbonat, Propylencarbonat, γ-Butyrolacton oder deren Mischungen.

Die Verwendung von Ethylenglykol, 1,2-Propylenglykol oder deren Mischungen als wassermischbare Lösungsmittel ist dabei bevorzugt.

Im allgemeinen verwendet man 10 bis 100 Gew.%, vorzugsweise 40 bis 80 Gew.% an wassermischbarem Lösungsmittel, jeweils bezogen auf das Gewicht des Rhodamin-Farbstoffs.

Die Menge an Wasser beträgt in der Regel das 10- bis 20-fache der Gewichtsmenge des Farbstoffs.

Die Menge an Natriumchlorid, die zugesetzt wird, beträgt im allgemeinen 50 bis 200 Gew.%, bezogen auf das Gewicht des Farbstoffs. Sie ist üblicherweise so bemessen, daß beim Abtrennen der Rhodamin-Farbstoffe in Granulatform das Natriumchlorid noch in Lösung ist.

Wasser und wassermischbares Lösungsmittel werden dabei im allgemeinen in solcher Menge angewendet, daß der Farbstoff bei einer Temperatur von 80 bis 100°C weitgehend in Lösung ist. Durch Steigerung des Lösungsmittelanteils wird die Löslichkeit des Farbstoffs zwar erhöht, jedoch ist dann zum Abscheiden des Farbstoffs auch die Menge an Natriumchlorid zu steigern. Eine zu hohe Lösungsmittelmenge, beispielsweise die dreifache Menge, bezogen auf die Gewichtsmenge des Farbstoffs, behindert das vollständige Abscheiden der Farbstoffe in flüssigem Aggregatzustand und senkt deren Erstarrungstemperatur.

Ein gewisser Anteil des Rhodamin-Farbstoffs, etwa bis zu 30 bis 40 %, kann auch in ungelöster, d.h. in kristalliner Form vorliegen. Dieser Anteil wird dann beim erfindungsgemäßen Verfahren von den in flüssigem Aggregatzustand vorliegenden Farbstofftropfen benetzt, wobei sich beim Abschrecken ein Granulat bildet, bei dem die Kristallspieße mit erstarrter Schmelze zusammengeklebt sind.

Will man den Rhodamin-Farbstoff der Formel I als Chlorid in Granulatform abscheiden, so empfiehlt es sich, vor der Zugabe von Natriumchlorid den Farbstoff vollständig zu lösen. Dabei kann es von Nutzen sein, die Konzentration der Chloridionen durch Mitverwendung von Salzsäure, im allgemeinen konz. Salzsäure, zu steigern. Sofern es sich um Produkte handelt, die eine technische Reinheit aufweisen, kann man zur Abtrennung unlöslicher Bestandteile die heiße Farbstofflösung vor der Kochsalzzugabe klärfiltrieren.

Als Rhodamin-Farbstoffe, die im erfindungsgemäßen Verfahren als Chloride, Methosulfate oder Ethosulfate in Granulatform hergestellt werden, kommen die obengenannten Farbstoffe der Formel I, in der An^{⊖} ein Anion bedeutet, in Betracht. Geeignete Anionen sind z.B. Sulfat, Hydrogensulfat, Methosulfat, Ethosulfat oder Chlorid.

Wie oben bereits ausgeführt, sind solche Farbstoffe bekannt und beispielsweise in der DE-A-1 769 078, DE-A-2 138 179, DE-A-3 531 272 oder US-A-3 767 358 beschrieben.

Als Ausgangsprodukte für das erfindungsgemäße Verfahren dienen in der Regel entweder die genannten Rhodamin-Farbstoffe in fester, jedoch nicht in staubfreier Form oder aber vorzugsweise die nach dem aus der DE-A-3 531 272 bekannten Verfahren erhältliche Reaktionslösung.

Wie oben bereits ausgeführt, werden in dem in der DE-A-3 531 272 beschriebenen Verfahren die veresterten Rhodamin-Farbstoffe der Formel I durch Veresterung der Lactone der Formel II 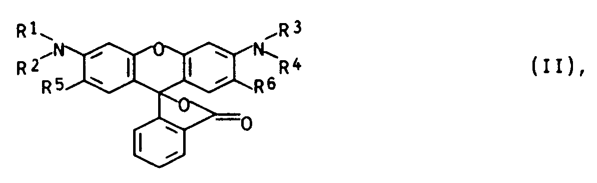
in der R¹, R², R³, R⁴, R⁵ und R⁶ jeweils die obengenannte Bedeutung besitzen, mit Dialkylsulfaten gewonnen.

Das erfindungsgemäße Verfahren wird zweckmäßig so durchgeführt, daß man eine Mischung aus Rhodamin-Farbstoff I, Wasser und einem wassermischbaren Lösungsmittel unter Rühren auf eine Temperatur von 80 bis 100°C erwärmt, zu dieser Mischung (oder zu der gemäß der DE-A-3 531 272 erhältlichen heißen Reaktionslösung der Farbstoff-Methylester-Methosulfate oder -Ethylester-Ethosulfate) bei einer Temperatur von 80 bis 100°C, gegebenenfalls nach Zusatz von weiterem Wasser und/oder Salzsäure, Natriumchlorid gibt. Danach schreckt man durch direktes Kühlen unter Rühren auf eine Temperatur von 60°C ab, läßt das Gemisch anschließend unter Rühren auf ca. 50°C abkühlen und isoliert die entstandenen Granulate.

Verzichtet man darauf, die Farbstoff-Methosulfate oder -Ethosulfate vollständig aufzulösen, so erhält man nach Zusatz von Natriumchlorid Gemische, die Methosulfat/Ethosulfat und Chlorid als Anionen aufweisen.

Durch das rasche Absenken der Temperatur (Abschrecken) unter Rühren wird verhindert, daß die Tröpfchen zusammenklumpen oder an der Wandung festkleben oder in eine feinkristalline Form übergehen. Dieses rasche Absenken ist im technischen Maßstab aber durch indirekte Kühlung, z.B. Solekühlung über die Kesselwandung, nicht ausreichend schnell möglich; man erhält nämlich auf diese Weise ein kristallines Produkt mit überwiegend feinen Kristallen, die nach dem Trocknen zum Stauben neigen. Aus diesem Grunde erfolgt das Abschrecken im erfindungsgemäßen Verfahren durch direkte Kühlung, z.B. durch Zugabe von Eis oder kaltem Wasser.

Die mittels des erfindungsgemäßen Verfahrens erhältlichen Farbstoff-Granulate weisen in trockener Form einen Erweichungspunkt auf, der über 100°C liegt. Die Mitverwendung der wassermischbaren Lösungsmittel im wäßrigen Medium bewirkt ein Absenken der Erstarrungstemperatur und verzögert die Kristallisation, wodurch das Erstarren der Tropfen zu einem Granulat beim Abschrecken begünstigt wird. Verzichtet man auf die Mitverwendung der wassermischbaren Lösungsmittel, so gelingt es nicht, durch Abschrecken des wäßrigen Mediums Granulate zu erzeugen.

Die Erstarrungstemperatur des in flüssigem Aggregatzustand vorliegenden Farbstoffs liegt bei ca. 65°C und kann, wie bereits ausgeführt, durch die Menge des verwendeten Lösungsmittel beeinflußt werden.

Die im wäßrigen Medium erstarrten Granulate lassen sich hervorragend abtrennen, z.B. über eine Nutsche oder Filterpresse. Auch beim Rühren oder Pumpen der Suspension bleiben die Granulate erhalten. Die Kornverteilung liegt in einem engen Bereich, nämlich bei ca. 1 bis 2 mm. Da der zum Stauben neigende Feinanteil fehlt, ist die Abtrennung mittels Zentrifugen besonders vorteilhaft. Vorteilhaft ist auch der niedrige Feuchtgehalt der Granulate nach dem Absaugen oder Abschleudern (unter 40 %). Sie eignen sich deshab auch für die direkte Weiterverarbeitung z.B. zu Flexodruckfarben.

Das Trocknen der Feuchtgranulate erfolgt zweckmäßig ruhend, z.B. in einem Trockenschrank, auf einem Trockenband oder in einem Taumeltrockner. Die mechanische Zerkleinerung beim Trocknen ist unzweckmäßig.

Die trockenen Granulate, die in einer rieselfähigen, formstabilen und staubarmen Granulatform vorliegen, entsprechend färberisch allen Anforderungen, auch hinsichtlich der Farbstärke tritt keine Abschwächung auf. Den staubarmen Pulverfarbstoffen, die z.B. durch Zusatz von Mineralöl in bekannter Weise hergestellt werden, sind die erfindungsgemäß hergestellten Granulate im Staubverhalten ebenbürtig, besitzen jedoch den Vorteil, daß sie frei sind von störenden Fremdstoffen. Die mit Mineralöl entstaubten Farbstoffpulver haben den Nachteil, daß ihre Anwendung in wäßrigem Medium, z.B. für Flexodruckfarben, zu unerwünschten Öl abscheidungen führen kann.

Die folgenden Beispiele sollen die Erfindung näher erläutern.

### Beispiel 1

26 g des Farbstoffs der Formel 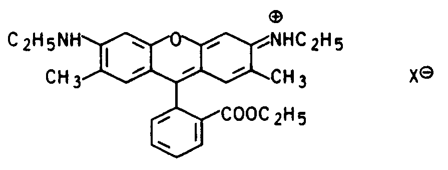
(mit X^{⊖} = C₂H₅OSO₃^{⊖}) in Pulverform wurden unter Rühren in 640 ml Wasser bei 90 bis 93°C gelöst. Dann wurden 9 g 1,2-Propylenglykol, 6,5 g konz. Salzsäure und 23 g Natriumchlorid zur Lösung hinzugegeben. Man verrührte 10 Minuten bei 90 bis 93°C, wobei sich der Farbstoff in flüssigem Aggregatzustand in Tröpfchenform abschied, und fügte dann 90 g Eis hinzu. Die Temperatur sank auf 70°C, dabei bildeten sich kleine Kügelchen von ungefähr halber Stecknadelkopfgröße. Man ließ unter Rühren weiter Abkühlen auf ca. 60°C, wobei die Kügelchen erstarrten, und saugte dann über eine Nutsche ab. Nach dem Trockensaugen erhielt man ein Nutschgut mit einem Wassergehalt von ca. 20 Gew.%.

Nach dem Trocknen im Umluft-Trockenschrank bei 80°C erhielt man 21 g des obengenannten Farbstoffs (mit X^{⊖} = Cl^{⊖}) in Form eines rieselfähigen Granulats mit nur sehr geringer Staubneigung.

### Beispiel 2

40 g des Farbstoffs der Formel 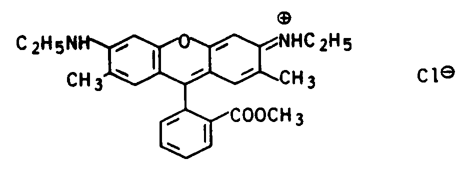
in Pulverform wurden in 640 ml Wasser unter Zugabe von 14 ml konz. Salzsäure und 16 g 1,2-Propylenglykol unter Rühren auf 92°C erhitzt und dabei in Lösung gebracht. Hernach fügte man rasch 35 g Natriumchlorid hinzu, verrührte 4 Minuten lang, wobei der Farbstoff sich als Harz abschied und Tröpfchenform bildete, und gab dann 100 g Eis unter Rühren in den Ansatz. Die Temperatur fiel innerhalb von 5 Minuten auf 65°C. Hierbei erstarrten die Tröpfchen zu einem Granulat. Das Granulat hatte ungefähr die Größe eines Stecknadelkopfes. Man verrührte weitere 5 Minuten und isolierte dann das Granulat über eine Nutsche. Der Wassergehalt im Nutschgut betrug ca. 18 %.

Nach dem Trocknen bei 80°C erhielt man 40 g des obengenannten Farbstoffs als rieselfähiges Granulat, das nur eine sehr geringe Staubneigung aufweist.

### Beispiel 3

In einem Rührgefäß wurden 471 g einer Mischung aus Ethylencarbonat und Propylencarbonat (1:1 v/v) mit 33 g Magnesiumoxid 10 Minuten verrührt. Die Temperatur von 30°C wurde dabei nicht überschritten. Dann wurde der Rührer abgeschaltet und es wurden 774 g Rhodamin 2C Base eingetragen. Danach gab man 270 g Dimethylsulfat (98 gew.%ig) zu und rührte 10 Minuten. Dann wurde langsam bis auf 80°C erwärmt. Danach stieg die Innentemperatur infolge der exothermen Reaktion ohne Wärmezufuhr auf ca. 105 bis 120°C an. Nach Erreichen einer Innentemperatur von 105°C wurde bei 110 bis 120°C noch 1 Stunde lang gerührt, danach war die Veresterung beendet.

Anschließend gab man unter Rühren 1500 ml kaltes Wasser hinzu und rührte dann 15 Minuten nach. Es stellte sich eine Temperatur von etwa 60°C ein, der pH lag bei ca. 7.

In einem weiteren Gefäß legte man 2000 ml kaltes Wasser vor und ließ unter Rühren 67,5 g 50 gew.%ige Natronlauge hinzufließen. Zu dieser vorgelegten Natronlauge ließ man den Inhalt aus dem Rührgefäß fließen. Es stellte sich eine Temperatur von 35°C ein. Um das Ethylencarbonat und Propylencarbonat zu verseifen, ließ man eine Stunde nachrühren, dann wurde mit 80 ml Schwefelsäure (76 gew.%ig) der pH auf 4,5 bis 4,0 eingestellt. Nach beendeter Säurezugabe wurde auf ca. 95°C erhitzt, um den Farbstoff vollständig zu lösen.

Zwecks Abtrennung geringer Mengen von Verunreinigungen wurde klärfiltriert. Das Filtrat wurde auf 90°C erhitzt, und mit 257 ml konz. Salzsäure versetzt und ca. 30 Minuten nachgerührt. Man gab dann 450 g Kochsalz hinzu, rührte weitere 30 Minuten nach, wobei der Farbstoff sich als Harz abschied und Tröpfchenform bildete und gab 1800 g Eis hinzu. Die Temperatur fiel auf ca. 60°C, dabei erstarrten die Tröpfchen zu einem Granulat. Es wurde 30 Minuten nachgerührt und das Granulat durch Absaugen isoliert. Nach dem Trocknen bei 80°C erhielt man den Farbstoff (Chlorid) als rieselfähiges Granulat mit nur sehr geringer Staubneigung.

### Beispiel 4

In einem Rührgefäß wurden 645 g einer Mischung aus Ethylencarbonat und Propylencarbonat (1:1 v/v) vorgelegt und unter Rühren mit 30 g Magnesiumoxid verrührt. Die Temperatur von 30°C wurde dabei nicht überschritten. Dann gab man 1290 g Rhodamin 2C Base und 550 g Diethylsulfat (98 gew.%ig) zu. Man erwärmte unter Rühren bis zur einsetzenden exothermen Reaktion und ließ die Innentemperatur auf 130°C ansteigen. Nach einstündigem Rühren bei 120°C gab man 1000 ml kaltes Wasser hinzu und rührte 15 Minuten bei 80°C nach um restliches Ethylencarbonat und Propylencarbonat zu verseifen.

In einem weiteren Gefäß legte man 5000 ml Wasser, das eine Temperatur von 80°C aufwies, vor, ließ unter Rühren den Inhalt aus dem Rührgefäß einfließen und gab 1000 g Natriumchlorid hinzu, wobei der Farbstoff sich als Harz abschied und Tröpfchenform bildete. Man gab dann 1500 g Eis hinzu und kühlte auf 60°C ab, wobei die Tröpfchen zu einem Granulat erstarrten. Es wurde 30 Minuten nachgerührt und das Granulat durch Absaugen isoliert. Nach dem Trocknen bei 80°C erhielt man den Farbstoff als rieselfähiges Granulat (Gemisch aus Chlorid und Ethosulfat) mit nur sehr geringer Staubneigung.

## Patentansprüche

1. Verfahren zur Herstellung von Rhodamin-Farbstoffen der Formel I 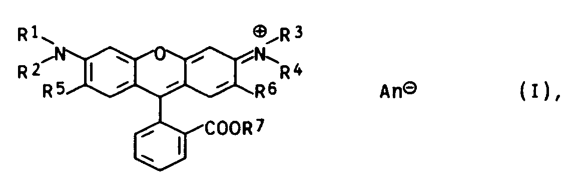 in der
R¹, R³ und R⁷ gleich oder verschieden sind und unabhängig voneinander jeweils Methyl oder Ethyl,
R² und R⁴ gleich oder verschieden sind und unabhängig voneinander jeweils Wasserstoff, Methyl oder Ethyl,
R⁵ und R⁶ gleich oder verschieden sind und unabhängig voneinander jeweils Wasserstoff oder Methyl und
An^{⊖} Chlorid, Methosulfat oder Ethosulfat bedeuten,
in Granulatform durch Fällen von Rhodamin-Farbstoffen der Formel I, in der R¹, R², R³, R⁴, R⁵, R⁶ und R⁷ jeweils die obengenannte Bedeutung besitzen und An^{⊖} ein Anion bedeutet, aus wäßrigem Medium, das ein wassermischbares Lösungsmittel enthält, mittels Natriumchlorid, dadurch gekennzeichnet, daß man die Zugabe von Natriumchlorid bei einer Temperatur von 80 bis 100°C vornimmt und dabei die Farbstoffe in flüssigem Aggregatzustand vom wäßrigen Medium abscheidet, sie dann durch Rühren in Tropfenform bringt und sie anschließend durch direktes Kühlen auf eine Temperatur unterhalb von 65°C abschreckt.

## Claims

1. A process for preparing a rhodamine dye of the formula I 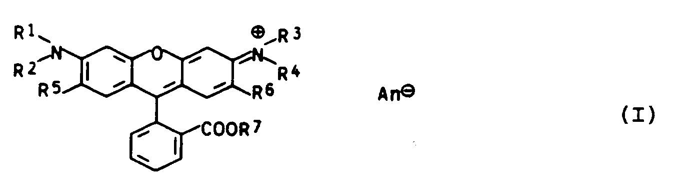 where
R¹, R³ and R⁷ are identical or different and each is independently of the others methyl or ethyl,
R² and R⁴ are identical or different and each is independently of the other hydrogen, methyl or ethyl,
R⁵ and R⁶ are identical or different and each is independently of the other hydrogen or methyl, and
An^{⊖} is chloride, methosulfate or ethosulfate,
in granule form by precipitating a rhodamine dye of the formula I where R¹, R², R³, R⁴, R⁵, R⁶ and R⁷ are each as defined above and An^{⊖} is an anion with sodium chloride from an aqueous medium which contains a water-miscible solvent, which comprises adding the sodium chloride at 80-100°C, which precipitates the dye from the aqueous medium in a liquid state, then stirring the liquid dye to convert it into a droplet form and then chilling the droplets by direct cooling to below 65°C.

## Revendications

1. Procédé de préparation de colorants de rhodamine de formule I 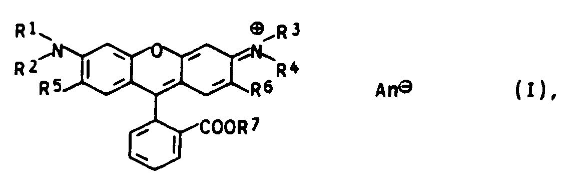 dans laquelle
R¹, R³ et R⁷ sont identiques ou différents et représentent indépendamment les uns des autres des groupements méthyle ou éthyle,
R² et R⁴ sont identiques ou différents et représentent indépendamment l'un de l'autre des atomes d'hydrogène ou des groupements méthyle ou éthyle,
R⁵ et R⁶ sont identiques ou différents et représentent indépendamment l'un de l'autre des atomes d'hydrogène ou des groupements méthyle et
An^{⊖} représente un ion chlorure, méthanesulfonate ou éthanesulfonate,
sous forme de granulés par précipitation des colorants de rhodamine de formule (I) dans laquelle R¹, R², R³, R⁴, R⁵, R⁶ et R⁷ ont chacun la signification donnée ci-dessus et An^{⊖} représente un anion, à partir d'un milieu aqueux qui contient un solvant miscible à l'eau, à l'aide de chlorure de sodium, caractérisé en ce qu'on effectue l'addition du chlorure de sodium à une température de 80 à 100°C et on sépare simultanémant du milieu aqueux les colorants à l'état d'agrégats liquides, on les amène par agitation sous forme de gouttelettes et on les trempe ensuite par refroidissement direct à une température inférieure à 65°C.
